# EUROPÄISCHE PATENTSCHRIFT

(11) **EP 2 613 975 B1**
(45) Veröffentlichungstag und Bekanntmachung des Hinweises auf die Patenterteilung: **05.11.2014**
(21) Anmeldenummer: 11787592.2
(22) Anmeldetag: 26.07.2011
(51) Int. Cl.: B60S 1/18, B60S 1/24, B60S 1/58, H02K 7/118

(54) **ANTRIEB**
DRIVE
ENTRAÎNEMENT

(30) Priorität: 07.09.2010 DE 102010044593
(43) Veröffentlichungstag der Anmeldung: 17.07.2013
(73) Patentinhaber: Strothmann, Rolf, 66123 Saarbrücken (DE)
(72) Erfinder: Strothmann, Rolf, 66123 Saarbrücken (DE)
(74) Vertreter: Bernhardt, Reinhold
(86) Internationale Anmeldenummer: PCT/DE2011/075180
(87) Internationale Veröffentlichungsnummer: WO 2012/031590

(56) Entgegenhaltungen:
- EP-A1- 0 514 272
- AU-B2- 459 711
- GB-A- 2 160 615
- US-A- 4 270 411

## Beschreibung

Die Erfindung betrifft einen Antrieb mit einem Motor und Einrichtungen zur Kopplung des Motors an ein Antriebsobjekt, wobei die Kopplungseihrichtungen eine durch den Motor bewegbare Schwungmasse und einen mit dem Antriebsobjekt verbundenen Stoßanschlag für die Schwungmasse umfassen.

Ein Antrieb für eine Kreiselpumpe, der diese Merkmale aufweist, geht aus der EP 0 514 272 A1 hervor. Durch die bewegbare Schwungmasse der Kopplungseinrichtungen und den Stoßanschlag wird die Drehbewegung der Motorwelle verzögert auf ein Laufrad der Kreiselpumpe übertragen.

Der Erfindung liegt die Aufgabe zugrunde, einen neuen, einen Motor verwendenden Antrieb zu schaffen, der ohne hohe Aufwendungen für ein Untersetzungsgetriebe große Antriebskräfte erzeugen konn.

Der diese Aufgabe lösende Antrieb nach der Erfindung ist dadurch gekennzeichnet, doss der Stoßanschlag zur Erzeugung einer die maximale Motorkraft übersteigenden Stoßkraft vorgesehen ist.

Vorteilhaft lässt sich bei der abrupten Abbremsung der Schwungmasse an dem Stoßanschlag eine das Antriebsobjekt bewegende Stoßkraft erzeugen, welche die Kraft, die der Motor maximal aufbringt, bei weitern übersteigen kann. Zum Antrieb eines schwerbeweglichen Objekts reicht ein schwacher Motor aus.

Als Antriebsobjekt kommt also ein zumindest vorübergehend schwergängiges, durch die abstoßende Schwungmasse ggf. stückweise bewegbares Antriebsobjekt in Betracht, z.B. eine Schraube, die festzuziehen oder zu lösen ist.

In einer besonders bevorzugten Ausführungsform der Erfindung ist das Antriebsobjekt ein ggf. anfänglich aus einem Anhaftungszustand zu lösendes Antriebsobjekt, wie z.B. ein Scheibenwischer, der an der Scheibe angefroren sein kann. Zu dessen Inbetriebnahme braucht der Scheibenwischermotor selbst keine zum Lösen des Anhaftungszustands ausreichende Motorkraft zu entwickeln, sondern der Motor kann bei geringem Betriebsstrom die Schwungmasse beschleunigen, welche dann den angefrorenen Scheibenwischer locker schlägt. Entsprechend gering kann der Aufwand für Motor und Steuerelektronik sein.

Vorzugsweise ist die Schwungmasse hauptsächlich durch die Masse des Läufers gebildet.

Zweckmäßig begrenzt der genannte Stoßanschlag ein Spiel in einem den Läufer mit dem Antriebsobjekt verbindenden, zum kontinuierlichen Antrieb des Antriebsobjekt nutzbaren Antriebsstrang. Insbesondere kann der Stoßanschlag durch ein Drehspiel (α) einer den Läufer mit dem Antriebsobjekt verbindenden Antriebswelle begrenzt sein. Das Spiel erlaubt eine durch das Antriebsobjekt unbehinderte Beschleunigung bzw. Drehbeschleunigung der Schwungmasse, z.B. des Läufers und ggf. eines Teils des Antriebsstrangs.

Zur Lösung z.B. eines Anhaftungszustands des Antriebsobjekts lässt sich der Läufer über eine dem Spiel entsprechende Strecke oder bis zu einer vorgegebenen Geschwindigkeit beschleunigen und prailt dann mehr oder weniger hart gegen den das Spiel begrenzenden, mit dem Antriebsobjekt verbundenen Stoßanschlag

Es versteht sich, dass die am Stoßanschlag entstehenden Stoßkräfte von den Eigenschaften des den Stoßanschlag bildenden Materials abhängen, und gezielt unter Einstellung gewünschter Stoßkräfte den Stoß mehr oder weniger stark dämpfende Materialien einsetzbar sind.

Anstelle der Bildung der Schwungmasse durch den Läufer des Motors könne auch eine gesonderte, vorübergehend im Austausch gegen einen das Antriebsobjekt permanent antreibenden Antriebsstrang an den Motor koppelbare Stoß- bzw. Schwungmasse vorgesehen sein.

Vorzugsweise ist eine Einrichtung zum Betrieb und zur Steuerung des Motors vorgesehen, welche die Position des Läufers, ggf. die Position des Antriebsobjekts und ggf. Betriebszustände des Motors erfasst und die erfassten Größen in die Steuerung der Bewegung des Läufers bzw. des Antriebsobjekts einbezieht.

Vorteilhaft erfasst diese Betriebs- und Steuereinrichtung neben den genannten Positionen und ggf. Betriebsströmen des Motors ferner die Geschwindigkeit und Beschleunigung des Läufers, ggf. durch Differentiation der Wegposition des Läufers nach der Zeit.

Vorteilhaft kann die Betriebs- und Steuereinrichtung die der jeweiligen Anschlagposition der Schwungmasse entsprechende Position des Läufers erfassen. Dies ist z.B. möglich durch einen Testlauf, bei dem das Erreichen des Stoßanschlags anhand entsprechend hoher negativer Beschleunigungswerte oder der Beschleunigung Null trotz Anstieg des Betriebsstroms erkannt wird.

Insbesondere kann die Betriebs- und Steuereinrichtung zur Erkennung der Loslösung des Antriebsobjekts aus einem Anhaftungszustand vorgesehen sein, wobei auch hierzu kinematische Größen ausgewertet werden.

In weiterer Ausgestaltung der Erfindung wiederholt bei Weiterbestehen des Anhaftungszustands die Betriebs- und Steuereinrichtung den Loslösungsvorgang, ggf. unter verstärkter Beschleunigung der Schwungmasse.

Das bei kontinuierlichem Antrieb störende Spiel kann durch die Betriebs- und Steuereinrichtung dadurch ausgeglichen werden, dass die Geschwindigkeit des Läufers so gesteuert wird, dass Stöße an den Stoßanschläge vermieden werden und die Spieldistanz dennoch schnell und ohne große Zeitverzögerungen durchlaufen wird.

In weiterer vorteilhafter Ausgestaltung der Erfindung ist der Motor im Stern verschaltet und die Betriebs- und Steuereinrichtungen zur Erfassung der Position des Läufers anhand einer Auswertung des Potentials am Sternpunkt vorgesehen.

Die Erfindung wird nachfolgend anhand eines Ausführungsbeispiels und der beiliegenden, sich auf dieses Ausführungsbeispiel beziehenden Zeichnungen weiter ertäutert. Es zeigen:
- Fig. 1: einen Scheibenwischer mit einem Antrieb nach der Erfindung,
- Fig. 2: einen in dem Scheibenwischerantrieb von Fig. 1 verwendeter Scheibenwischermotor in Seitenansicht und
- Fig. 3: ein Detail des Scheibenwischermotors von Fig. 1.

Ein Scheibenwischer 1 an einer Frontscheibe 2, z.B. eines PKW, wird durch einen Elektromotor 3 angetrieben. Strichlinien 4 und 5 deuten auf den durch das Wischerblatt des Scheibenwischers 1 erfassten Bereich der Frontscheibe 2 hin. Eine Motorbetriebs- und -steuereinrichtung 6 sorgt für Drehbewegungen des Motors in wechselnden Richtungen entsprechend der Hin- und Herbewegung des Schreibenwischers 1.

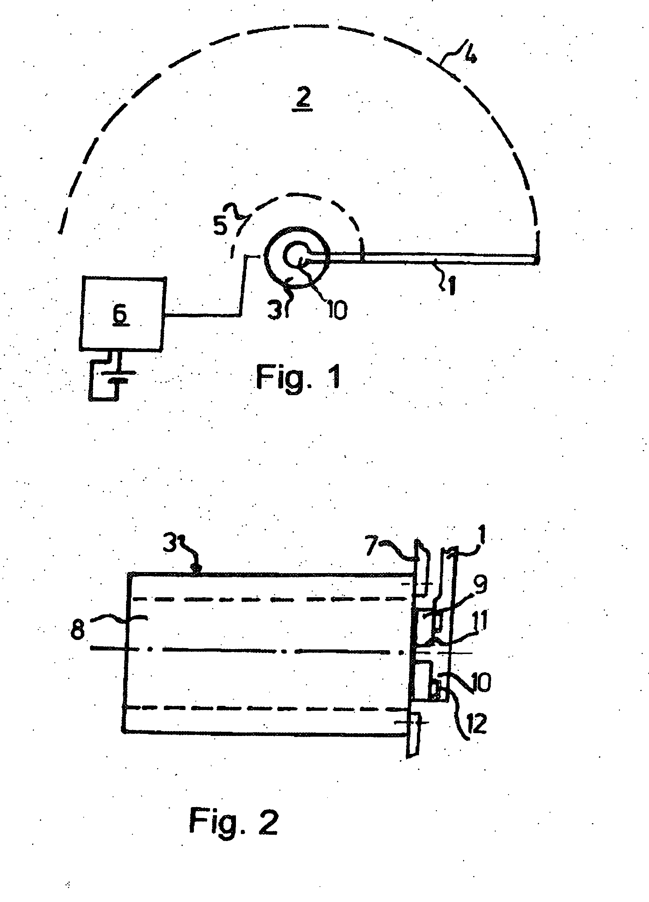

Wie aus Fig. 2 hervorgeht, unifasst der innenseitig an einem Blech 7 z.B. einer (nicht gezeigten) Fahrzeugkarosserie befestigte Motor 3 einen Innenläufer 8, der mit einer axial vorstehenden, zu dem Innenläufer 8 koaxialen Antriebsscheibe 9 verbunden ist. Auf der Antriebsscheibe 9 sitzt koaxial zu dieser ein Antriebsteller 10 des Scheibenwischers 1, der mit einem Zapfen 1 in die Antriebsscheibe 9 um die Zapfenachse drehbar eingreift. Von der Antriebsscheibe 9 stehen zwei auf der Antriebsscheibe 9 diametral angeordnete Mitnehmerzapfen 12 in Ausnehmungen 13 in dem Antriebsteller 10 hinein vor.

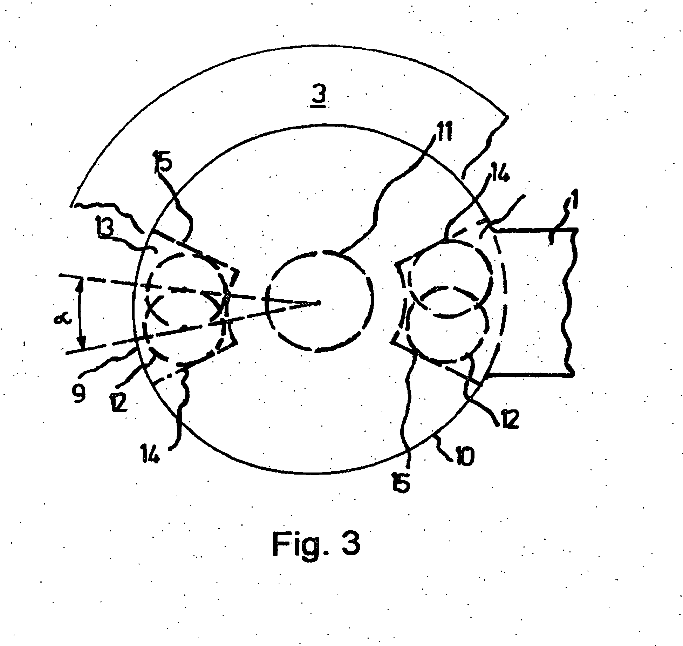

Wie Fig. 3 erkennen lässt, erstrecken sich die beiden Ausnehmungen 13 in Umfangsrichtung des Antriebstellers 10 über eine Länge, die größer als der Durchmesser der Mitnehmerzapfen 12 ist. Die Mitnehmerzapfen 12 haben daher in den Ausnehmungen 13 ein Spiel, und der Antriebsteller 10 kann sich dadurch gegen die Antriebsscheibe 9 über einen Winkel α drehen, wobei einander gegenüberliegende Ränder der Ausnehmungen 13 jeweils Stoßanschläge 14 und 15 für die Mitnehmerzapfen 12 bilden.

Die Motorbetriebs- und -Steuereinrichtung 6 umfasst eine Enrichtung zur Erfassung der Drehwinkelposition des Innenläufers 8, wobei die Bestimmung der Drehwinkelposition in dem gezeigten Ausführungsbeispiel anhand einer Auswertung des Potentials am Sternpunkt des im Stern verschalteten Motors 3 erfolgt. Eine solche Drehlagebestimmung auf der Basis einer Auswertung des Sternpunktpotentials ist in der EP 1 005 716 B1 beschrieben.

Die Motorbetriebs- und -steuereinrichtung 6 umfasst ferner Einrichtungen zur Bestimmung der Winkelgeschwindigkeit und Winkelbeschleunigung des Läufers 8 anhand einer Differentiation des Drehwinkels nach der Zeit.

Bei Inbetriebnahme des Scheibenwischers 1 beginnt der Läufer 8 sich je nach Ausgangsposition des Scheibenwischers 1 in der einen oder anderen Drehrichtung zu bewegen. Die Motorbetriebs- und -sieuereinrichtung 6 ermittelt fortlaufend neben den Motorbefriebsströmen die Winkelposition, Winkelgeschwindigkeit und WinkelBeschleunigung des Läufers 8. Anhand der genannten Größen kann die Motorbetriebs- und -steuereinrichtung 6 ermitteln, ob sich die Mitnehmerzapfen 12 zwischen den Stoßanschlägen 14,15 befinden oder einen der Stoßanschläge 14,15 erreicht haben. Anhand der genannten Größen kann die Motorbetriebs- und -steuereinrichtung 6 ferner feststellen, ob die Mitnehmerzapfen 12 den Scheibenwischer 1 bewegen oder nicht.

Erreichen die Mitnehmerzapfen 12 den Stoßanschlag 14 oder 15, ohne den Scheibenwischer 1 bewegen zu können, weil er zu fest an der Scheibe 2 anhaftet so sorgt die Motorbetriebs- und -sieuereinrichtung 6 für eine Rückwärtsarehung des Läufers 8 bis zum entgegengesetzten Stoßanschlag, d.h. für eine Rückwärtsdrehung um die Winkelstrecke α. Von dort an wird der Läufer 8 dann in Vorwärtsrichtung stark beschleunigt, so dass die Mitnehmerzapfen 12 heftiger gegen den betreffenden Stoßanschlag anstoßen und es ggf. zur Lösung des Anhaftungszustandes kommt. Gelingt dies nicht, so kann der Vorgang wiederholt werden, ggf. unter verstärkter Winkelbeschleunigung des Läufers 8.

Wenn der Scheibenwischer 1 aus dem Anhaftungszustand befreit ist, kann ihn der Motor 3 unter Aufbringung der zur Überwindung der Gleitreibungskraft erforderlichen Kraft mit der gewünschten Geschwindigkeit weiter bewegen.

An den Umkehrpunkten der Bewegung wird die Geschwindigkeit des Läufers 8 durch die Motorbetriebs- und -steuereinrichtung 6 so gesteuert, dass es zu keinem nennenswerten Stoß der Zapfen 12 gegen die Stoßanschläge 14 bzw. 15 kommt. Durch entsprechende Steuerung des Läufers 8 lässt sich das im Normalbetrieb störende Spiel also problemlos ausgleichen und ein stoßfreier Lauf des Scheibenwischers 1 erreichen.

## Patentansprüche

1. Antrieb mit einem Motor (3) und Einrichtungen (9-12) zu des Motors (3) an ein Antriebsobjekt (1), wobei die Kopplungseinrichtungen (9-12) eine durch den Motor (3) bewegbare Schwungmasse (8,9) und einen mit dem Antriebsobjekt (1) verbundenen Stoßanschlag (14.15) für die Schwungmasse (8,9) umfassen.
**dadurch gekennzeichnet**
**dass** der Stoßanschlag (14,15) zur Erzeugung einer die maximale Motorkraft übersteigenden Stoßkraft vorgesehen ist

2. Antrieb nach Anspruch 1,
**dadurch gekennzeichnet,**
**dass** das Antriebsobjekt (1) ein zumindest vorübergehend schwergängiges, durch die anstoßende Schwungmasse (8,9) ggf. stückweise bewegbares Antriebsobjekt (1) ist.

3. Antrieb nach einem der Ansprüche 1 oder 2.
**dadurch gekennzeichnet.**
**dass** das Antriebsobjekt ein ggf. anfänglich aus einem Anhaftungszustand zu lösendes Antriebsobjekt ist, insbesondere ein Scheibenwischer (1).

4. Antrieb nach einem der Ansprüche 1 bis 3,
**dadurch gekennzeichnet,**
**dass** die Schwungmasse (8,9) die Masse eines Läufers (8) des Motors (3) umfasst.

5. Antrieb nach Anspruch 4,
dass der Stoßanschlag (14,15) ein Spiel (α) in einem den Läufer (8) mit dem Antriebsobjekt (1) verbindenden, zum kontinuierlichen Antrieb des Antriebsobjekts (1) nutzbaren Antriebsstrang (9-12) begrenzt.

6. Antrieb nach Anspruch 5,
**dadurch gekennzeichnet,**
**dass** der Stoßanschlag (14,15) ein Drehspiel (a) einer den Läufer (8) mit dem Antriebsobjekt (1) verbindenden Antriebswelle (9,12) begrenzt.

7. Antrieb nach einem der Ansprüche 1 bis 6,
**dadurch gekennzeichnet.**
**dass** eine die Position des Läufers (8), ggf. die Position des Antriebsobjekts (1) und ggf. Betriebszustände des Motors (3), erfassende Einrichtung (6) zum Betrieb und zur Steuerung des Motors (3) vorgesehen ist.

8. Antrieb nach Anspruch 7,
**dadurch gekennzeichnet,**
**dass** die Betriebs-und Steuereinrichtung (6) ferner zur Erfassung der Geschwindigkeit und/oder Beschleunigung des Läufers (8), ggf. durch Differentiation der Wegposition des Läufers (8) nach der Zeit, vorgesehen ist.

9. Antrieb nach Anspruch 7 oder 8,
**dadurch gekennzeichnet,**
**dass** die Betriebs-und Steuereinrichtung (6) zur Erfassung der jeweiligen Position des Läufers (8) bei Stoßanschlag (14,15) der Schwungmasse (8,9) vorgesehen ist.

10. Antrieb nach einem der Ansprüche 7 bis 9.
**dadurch gekennzeichnet.**
**dass** die Betriebs- und Steuereinrichtung (6) zur Erkennung einer Loslösüng des Antriebsobjekts (1) aus dem Anhaftungszustand vorgesehen ist.

11. Antrieb nach Anspruch 10,
**dadurch gekennzeichnet,**
**dass** die Betriebs- und Steuereinrichtung (6) bei Weiterbestehen des Anhaftungszustands zur Wiederholung des Loslösüngsvorgangs vorgesehen ist. ggf. unter verstärkter Beschleunigung der Schwungmasse (8,9).

12. Antrieb nach einem der Ansprüche 7 bis 11.
**dadurch gekennzeichnet.**
**dass** die Betriebs und Steuereinrichtung (6) nach Lösung des Anhaftungszustands zur Steuerung der Bewegung des Läufers (8) bei kontinuierlichem Antrieb unter Vermeidung von Stößen der Schwungmasse (8,9) gegen den Stoßanshag (14,15), insbesondere bei einem Richtungswechsel der Antriebsbewegung, vorgesehen ist.

13. Antrieb nach einem der Ansprüche 7 bis 12.
**dadurch gekennzeichnet,**
**dass** der Motor im Stern verschaltet ist und die Betriebs- und Steuereinrichtung (6) zur Erfassung der Position des Läufers (8) anhand einer Auswertung des Potentials am Sternpunkt vorgesehen ist.

## Claims

1. Drive having a motor (3) and devices (9-12) for coupling the motor (3) to a drive object (1), wherein the coupling devices (9-12) comprise a centrifugal mass (8, 9) which can be moved by the motor (3) and an impact stop (14, 15), connected to the drive object (1), for the centrifugal mass (8, 9),
**characterized**
**in that** the impact stop (14, 15) is provided for generating an impact force which exceeds the maximum motor force.

2. Drive according to Claim 1,
**characterized**
**in that** the drive object (1) is a drive object (1) which has, at least temporarily, difficult movement and can be moved by the impacting centrifugal mass (8, 9), if appropriate on a piecemeal basis.

3. Drive according to one of Claims 1 and 2,
**characterized**
**in that** the drive object is a drive object, in particular a windscreen wiper (1), which, under certain circumstances, must be initially released from an adhering state.

4. Drive according to one of Claims 1 to 3,
**characterized**
**in that** the centrifugal mass (8, 9) comprises the mass of a rotor (8) of the motor (3).

5. Drive according to Claim 4,
**characterized**
**in that** the impact stop (14, 15) bounds play (α) in a drive train (9-12) which connects the rotor (8) to the drive object (1) and can be used for continuously driving the drive object (1).

6. Drive according to Claim 5,
**characterized**
**in that** the impact stop (14, 15) bounds rotary play (α) of a drive shaft (9, 12) which connects the rotor (8) to the drive object (1).

7. Drive according to one of Claims 1 to 6,
**characterized**
**in that** a device (6) which detects the position of the rotor (8), under certain circumstances the position of the drive object (1) and, under certain circumstances, operating states of the motor (3), is provided for driving and for controlling the motor (3).

8. Drive according to Claim 7,
**characterized**
**in that** the operating and control device (6) is additionally provided for detecting the speed and/or acceleration of the rotor (8), under certain circumstances by deriving the travel position of the rotor (8) with respect to time.

9. Drive according to Claim 7 or 8,
**characterized**
**in that** the operating and control device (6) is provided for detecting the respective position of the rotor (8) at the impact stop (14, 15) of the centrifugal mass (8, 9).

10. Drive according to one of Claims 7 to 9,
**characterized**
**in that** the operating and control device (6) is provided for detecting release of the drive object (1) from the adhering state.

11. Drive according to Claim 10,
**characterized**
**in that** the operating and control device (6) is provided, in the event of the adhering state continuing to exist, to repeat the release process, if appropriate with increased acceleration of the centrifugal mass (8, 9).

12. Drive according to one of Claims 7 to 11,
**characterized**
**in that** the operating and control device (6) is provided, after release of the adhering state, for controlling the movement of the rotor (8) in the case of continuous drive while avoiding impact of the centrifugal mass (8, 9) against the impact stop (14, 15), in particular in the case of a change of direction of the drive movement.

13. Drive according to one of Claims 7 to 12,
**characterized**
**in that** the motor has a star connection and the operating and control device (6) is provided for detecting the position of the rotor (8) on the basis of an evaluation of the potential at the star point.

## Revendications

1. Entraînement comprenant un moteur (3) et des moyens (9-12) pour coupler le moteur (3) à un objet entraîné (1), dans lequel les moyens de couplage (9-12) comprennent une masse d'inertie (8, 9) mise en déplacement par le moteur (3) et une butée à choc (14, 15), reliée à l'objet entraîné (1), pour la masse d'inertie (8, 9),
**caractérisé en ce que** la butée à choc (14, 15) est prévue pour engendrer une force de choc qui dépasse la force maximale du moteur.

2. Entraînement selon la revendication 1,
**caractérisé en ce que** l'objet entraîné (1) est un objet entraîné (1) provisoirement difficilement déplaçable, qui peut être déplacé par la masse d'inertie appliquant des chocs (8, 9), le cas échéant par petites étapes.

3. Entraînement selon l'une des revendications 1 ou 2,
**caractérisé en ce que** l'objet entraîné est un objet entraîné qui doit être libérer le cas échéant initielement d'un état d'adhérence, en particulier un essuie-glace (1).

4. Entraînement selon l'une des revendications 1 à 3,
**caractérisé en ce que** la masse d'inertie (8, 9) inclut la masse d'un rotor (8) du moteur (3).

5. Entraînement selon la revendication 4,
**caractérisé en ce que** la butée à choc (14, 15) limite un jeu (a) dans un train d'entraînement (9-12) qui relie le rotor (8) à l'objet entraîné (1) et utilisable pour l'entraînement continu de l'objet entraîné (1).

6. Entraînement selon la revendication 5,
**caractérisé en ce que** la butée à choc (14, 15) limite un jeu rotatif (a) d'un arbre d'entraînement (9, 12) qui relie le rotor (8) à l'objet entraîné (1).

7. Entraînement selon l'une des revendications 1 à 6,
**caractérisé en ce qu'**il est prévu un système (6), qui détecte la position du rotor (8), le cas échéant la position de l'objet entraîné (1), et le cas échéant des états de fonctionnement du moteur (3), pour le service et pour la commande du moteur (3).

8. Entraînement selon la revendication 7,
**caractérisé en ce que** le système de service et de commande (6) est en outre prévu pour détecter la vitesse et/ou l'accélération du rotor (8), le cas échéant par dérivation de la position du trajet du rotor (8) par rapport au temps.

9. Entraînement selon la revendication 7 ou 8,
**caractérisé en ce que** le système de service et de commande (6) est prévu pour détecter la position respective du rotor (8) vers la butée à choc (14, 15) de la masse d'inertie (8, 9).

10. Entraînement selon l'une des revendications 7 à 9,
**caractérisé en ce que** le système de service et de commande (6) est prévu pour la reconnaissance d'un détachement de l'objet entraîné (1) hors de la situation d'adhérence.

11. Entraînement selon la revendication 10,
**caractérisé en ce que** le système de service et de commande (6) est prévu, en cas de perduration de la situation d'adhérence, pour répéter le processus de détachement, le cas échéant en accélérant la masse d'inertie (8, 9) de manière renforcée.

12. Entraînement selon l'une des revendications 7 à 11,
**caractérisé en ce que** le système de service et de commande (6) est prévu, après détachement de la situation d'adhérence, pour commander le mouvement du rotor (8) avec un entraînement continu et en évitant des chocs de la masse d'inertie (8, 9) contre la butée à choc (14, 15), en particulier lors d'une inversion de direction du mouvement d'entraînement.

13. Entraînement selon l'une des revendications 7 à 12,
**caractérisé en ce que** le moteur est branché en étoile, et le système de service et de commande (6) est prévu pour détecter la position du rotor (8) au moyen d'une évaluation du potentiel au niveau du centre de l'étoile.
